# EUROPÄISCHE PATENTANMELDUNG

(11) **EP 4 541 610 A1**
(43) Veröffentlichungstag der Anmeldung: **23.04.2025**
(21) Anmeldenummer: 24204231.5
(22) Anmeldetag: 02.10.2024
(51) Int. Cl.: B60G 21/05

(54) **VERBUNDLENKERACHSE**

(30) Priorität: 12.10.2023 DE 102023127934
(71) Anmelder: Benteler Automobiltechnik GmbH, 33102 Paderborn (DE)
(72) Erfinder: Claußen, Lars, 33175 Bad Lippspringe (DE); Hertel, Olaf, 38108 Braunschweig (DE); Rieckmann, Andreas, 38100 Braunschweig (DE); Schmidt-Beljawski, Eduard, 29525 Uelzen (DE); Schneider, Klaus, 34431 Marsberg (DE); Schultz, Erik, 33102 Paderborn (DE)
(74) Vertreter: Ksoll, Peter

(57) **Zusammenfassung**

Die Erfindung betrifft eine Verbundlenkerachse, welche zwei Seitenarme 11 und ein Torsionsprofil 1 aufweist. Das Torsionsprofil 1 ist jeweils mit einem Seitenarm 11 durch eine Schweißnaht 18 verbunden. Zumindest im Bereich der Schweißverbindung weist das Torsionsprofil 1 eine Wand 4 mit einer Wandstärke t1 auf, die größer ist als die Wandstärke t2 einer Wand 12 eines Seitenarms 11. Das Torsionsprofil 1 weist an jedem Endabschnitt 5 eine Fügefläche 13 auf und die Seitenarme 11 weisen jeweils eine Fügefläche 14 auf, wobei das Torsionsprofil 1 und die Seitenarme 11 an ihren einander zugewandten Fügeflächen 13, 14 jeweils durch eine Schweißnaht 18 verbunden sind. Die Fügefläche 13 am Endabschnitt 5 des Torsionsprofils 1 weist eine spanlos gefertigte Schräge 9 auf. Der sich zwischen den einander zugewandten Fügeflächen 13, 14 von Endabschnitt 5 und Seitenarm 11 gebildete Fügespalt 15 ist V-förmig konfiguriert. Hierdurch kann der Einbrand der Schweißnaht 18 am Torsionsprofil 1 deutlich erhöht werden.

## Beschreibung

Die Erfindung betrifft eine Verbundlenkerachse für Kraftfahrzeuge gemäß den Merkmalen im Oberbegriff von Anspruch 1.

Eine Verbundlenkerachse weist zwei biege- und verdrehsteife Seitenarme und ein sich zwischen diesen quer erstreckendes Torsionsprofil auf, welches die Seitenarme torsionsweich verbindet. Eine Verbundlenkerachse zeichnet sich durch eine gute Seitenführung bei Kurvenfahrt sowie ihren günstigen Raumbedarf und geringes Gewicht aus.

Eine Verbundlenkerachse mit einem im Querschnitt V-förmigen Torsionsprofil ist beispielsweise durch die DE 27 359 39 C2 oder die EP 0 916 530 B1 bekannt. Das Torsionsprofil ist mit den Seitenarmen verschweißt.

Aufgrund der im Betrieb wirkenden hohen dynamischen und auch statischen Kräften, insbesondere von Längskräften, liegen hohe Belastungen auf der Schweißnaht zwischen dem Torsionsprofil und den Seitenarmen. Der Festigkeit der Schweißnähte und der Schweißnahtqualität kommt daher besondere Bedeutung zu. Die Einbrandtiefe einer Schweißnaht steht dabei in engem Zusammenhang mit der Fügefestigkeit.

Der Erfindung liegt ausgehend vom Stand der Technik die Aufgabe zugrunde, eine Verbundlenkerachse im Belastungsverhalten zu verbessern und in der Lebensdauer zu steigern ohne deren Gewicht nachteilig zu erhöhen.

Die Lösung dieser Aufgabe besteht nach der Erfindung in einer Verbundlenkerachse gemäß den Merkmalen von Anspruch 1.

Vorteilhafte Ausgestaltungen und Weiterbildungen der erfindungsgemäßen Verbundlenkerachse sind Gegenstand der abhängigen Ansprüche.

Eine Verbundlenkerachse weist zwei Seitenarme und ein Torsionsprofil auf, welches die beiden Seitenarme torsionsweich verbindet. Das Torsionsprofil ist mit den Seitenarmen jeweils durch eine Schweißverbindung verbunden. Das Torsionsprofil weist eine Wand mit einer Wandstärke auf und die Seitenarme weisen jeweils eine Wand mit einer Wandstärke auf. Das Torsionsprofil weist an jedem Endabschnitt eine Fügefläche auf. Auch jeder Seitenarm weist eine Fügefläche auf. Das Torsionsprofil und die Seitenarme sind an ihren einander zugewandten Fügeflächen jeweils durch eine Schweißnaht verbunden. Das Torsionsprofil und jeweils ein Seitenarm werden in einem Winkel von 90° zusammengefügt. Die Stoßfläche am Endabschnitt des Torsionsprofils wird mit der Oberfläche eines Seitenarms verschweißt, um die Form eines "T" anzunehmen. Auf diese Weise entsteht ein T-Stoß zwischen dem Torsionsprofil und jeweils einem Seitenarm.

Die Fügefläche weist an den Endabschnitten des Torsionsprofils jeweils eine spanlos gefertigte Schräge auf. Durch die Schräge verjüngt sich der Endabschnitt in Richtung zum stirnseitigen Ende des Torsionsprofils. Die Endabschnitte des Torsionsprofils erhalten eine auf die schweißtechnische Fügung abgestimmte Nahtvorbereitung. Die Fügefläche wird durch den Abschnitt der Schräge verlängert und verjüngt sich zum Ende des Endabschnitts hin. Durch die Schräge in der Fügefläche des Endabschnitts erhält der Fügespalt zwischen der Fügefläche am Endabschnitt des Torsionsprofils und der Fügefläche an einem Seitenarm eine V-förmige Konfiguration. Der Fügespalt zwischen dem Endabschnitt des Torsionsprofils und dem Seitenarm ist V-förmig konfiguriert. Durch die Schräge und den V-förmigen Fügespalt ist ein hoher Einbrand im Torsionsprofil möglich. Als Einbrand bezeichnet man die Tiefe der aufgeschmolzenen Zone im Grundwerkstoff, hier dem Stahlwerkstoff des Torsionsprofils im Endabschnitt. Es wird ein bauteiloptimierter und verfahrenstechnischer verbesserter Einbrand im Torsionsprofil erzeugt.

Der Einbrand liegt überlicherweise zwischen 2 % bis 10 %. Die Erfindung lässt auch höhere Einbrandgrade erwarten. Die Flankeneinbrandlänge, also die Länge des aufgeschmolzenen Bereichs, in dem der Schweißzusatzwerkstoff eine Verbindung mit dem Grundmaterial eingegangen ist, beträgt 70 % bis 90 % der Wandstärke der Bauteile, insbesondere der Wandstärke des Torsionsprofils. Insbesondere ermöglicht die Erfindung einen Einbrand von bis zu 30 % prozesssicher zu erreichen. Praktische Versuche lassen noch höhere Werte für den Einbrand erwarten, so dass der Einbrand bis auf größer 50 % gesteigert werden kann.

Durch die erfindungsgemäß vorgesehene Schräge kann beim Schweißen Schweißzusatzwerkstoff zwischen die Bauteile im Fügespalt geschoben werden, so dass die Wurzel Schweißnaht weiter bzw. tiefer in den Fügespalt verlagert wird. In der Folge ergibt sich ein deutlich höherer Einbrand.

Die Erfindung schafft eine Verbundlenkerachse mit höherer Lebensdauer ohne eine Erhöhung des Bauteilgewichts. Die schweißtechnische Fügung zwischen dem Torsionsprofil und den beiden Seitenarmen ist hochstabil und weist ein optimiertes statisches und insbesondere dynamisches Belastungsverhalten auf. Die fahrdynamisch vorteilhaften Eigenschaften und damit die Leistungsfähigkeit mit einem Höchstmaß an Fahrstabilität und Komfort bleiben erhalten.

Häufig haben das Torsionsprofil und die Seitenarme unterschiedliche Wandstärken. Üblicherweise weist das Torsionsprofil eine größere Wandstärke auf als die Seitenarme. Bei einer schweißtechnischen Fügung mittels konventionellem Stumpfstoß hat sich gezeigt, dass es wegen des Wandstärkenunterschieds zwischen Torsionsprofil und Seitenarm schwer ist, einen hohen Einbrand der Schweißnaht in das Torsionsprofil zu erhalten ohne einen Durchbrand am Seitenarm zu erzeugen. Durch den geringeren Einbrand kann es zu einer Reduzierung der Lebensdauer einer Verbundlenkerachse kommen. Hier schafft die Erfindung Abhilfe.

Bei einer besonders vorteilhaften Ausführungsform der erfindungsgemäßen Verbundlenkerachse weist das Torsionsprofil eine größere Wandstärke auf als die Seitenarme. Die Wandstärke der Wand des Torsionsprofils ist zumindest im Bereich der Schweißverbindung größer als die Wandstärke der Wand eines Seitenarms im Bereich der Schweißverbindung.

Weiterhin ist es möglich, dass die Wandstärke der Wand des Torsionsprofils kleiner ist als die Wandstärke der Wand eines Seitenarms. Die Wandstärke der Wand des Torsionsprofils kann insgesamt kleiner sein als die Wandstärke der Wand eines Seitenarms. Die Wandstärken können aber auch nur im Bereich der Schweißverbindung zwischen Torsionsprofil und Seitenarm voneinander verschieden sein.

Durch die erfindungsgemäßen Schräge und den V-förmigen Fügespalt wird ein hoher Einbrand im ersten Bauteil, also dem Bauteil mit der dickeren bzw. stärkeren Wand, erreicht, ohne dass es zu einem Durchbrand in der dünneren Wand eines Seitenarms kommt.

Die Schräge kann sich entlang der gesamten Fügefläche des Torsionsprofils erstrecken. Insbesondere ist die Schräge in den Bereichen einer Stoßkante vorgesehen, in welchen die größten Belastungen durch äußere Kräfte auftreten. Bei einem Torsionsprofil einer Verbundlenkerachse ist die Schräge insbesondere an den Fügeflächen der Schenkel des Torsionsprofils vorgesehen. Bei einem im Querschnitt U- oder V-förmigen Torsionsprofil ist die Schräge innenseitig oder außenseitig des Querschnitts auf der Außenseite des Torsionsprofils des Querschnitts auf der Innenseite des Torsionsprofils entlang der Schenkel angeordnet.

Die Schräge kann auch nur auf einem Teilabschnitt der Länge der Fügefläche am Endabschnitt des Torsionsprofils vorgesehen sein. Insbesondere ist die Schräge von einem freien Ende der Wand des Torsionsprofils ausgehend über einen Längenabschnitt von ca. 30 % bis 75 %, insbesondere von ca. 50 %, der Länge der Wand des Torsionsprofils ausgebildet. Die tangentiale Länge der Schräge ist im Querschnitt des Torsionsprofils in Richtung des Umfangs des Torsionsprofils gemessen und kann sich über die gesamte Umfangslänge der Stirnseite des Torsionsprofils erstrecken. Die tangentiale Länge der Schräge kann aber auch nur über die Länge eines Schenkels verlaufen oder auf einem Teilabschnitt der Länge eines Schenkels eines Torsionsprofils vorgesehen sein.

Durch die erfindungsgemäße Ausgestaltung der Fügefläche am Endabschnitt des Torsionsprofils mit der spanlos gefertigten Schräge ist eine V-förmige Konfiguration realisiert. Durch die spanlos gefertigte Schräge und den V-förmig konfigurierten Fügespalt ist ein optimierter hoher Einbrand realisierbar. Die Qualität der Schweißverbindung ist deutlich verbessert.

Das Torsionsprofil und die Seitenarme sind in einem Winkel quer zueinander ausgerichtet, insbesondere stößt das Torsionsprofil mit einem T-Stoß jeweils an einen Seitenarm.

Der Endabschnitt des Torsionsprofils weist stirnseitig eine Stoßfläche auf, wobei die Stoßfläche im Wesentlichen rechtwinklig zur Längsachse der Wand des Torsionsprofils verläuft. Die stirnseitige Stoßfläche ist Bestandteil der Fügefläche am Endabschnitt des Torsionsprofils. Mit der Stoßfläche stößt das Torsionsprofil stumpf gegen die Fügefläche am Seitenarm.

Die Schräge ist Bestandteil der Fügefläche am Endabschnitt des Torsionsprofils. Die Schräge läuft in die Stirnseite des Endabschnitts aus. An die Schräge schließt sich die Stoßfläche an.

Die Stoßfläche ist länger als die Länge der Schräge. Die Stoßfläche erstreckt sich parallel zur Fügefläche an einem Seitenarm.

Jeder Seitenarm hat zumindest in einem Mittellängenabschnitt einen rohrförmigen Querschnitt und ist als Hohlprofil gestaltet bzw. durch ein Hohlprofil gebildet. Im Fügebereich mit dem Torsionsprofil weist jeder Längslenker eine auf die endseitige Stoßfläche des Torsionsprofils abgestimmte Fügefläche auf. Die Fügeflächen von Torsionsprofil und Seitenarm sind kongruent zueinander gestaltet.

Die Erfindung sieht vor, dass die Stoßfläche eine rechtwinklig zur Längsachse der Wand des Torsionsprofils gemessene Breite aufweist, welche größer ist als die Wandstärke der Wand eines Seitenarms.

Die Schräge verläuft in einem Winkel zur Längsachse der Wand des Torsionsprofils, vorzugsweise liegt der Winkel in einem Bereich zwischen 25° bis 60°. Besonders vorteilhaft ist ein Winkel im Bereich von 30° bis 45°. Für die Praxis ist ein Winkel von ca. 45° besonders vorteilhaft.

Die Schräge weist eine axiale Länge auf, wobei die axiale Länge gleich oder kleiner ist als die Wandstärke der Wand des Torsionsprofils im Endabschnitt. Insbesondere ist das Verhältnis der axialen Länge der Schräge zur Wandstärke der Wand des Torsionsprofils zwischen 1:1 und 1:1,5 bemessen. Die axiale Länge der Schräge ist in Richtung der Längsachse der Wand des Torsionsprofils gemessen.

Die Stoßfläche an der Stirnseite des Endabschnitts eines Endprofils weist eine Breite auf, wobei die Breite rechtwinklig zur Längsachse der Wand des Torsionsprofils gemessen ist. Die Breite der Stoßfläche ist größer als die Wandstärke der Wand des Torsionsprofils. Insbesondere ist die Breite der Stoßfläche 10 % bis 50 % größer als die Wandstärke der Wand des Torsionsprofils. Dementsprechend ist das Verhältnis der Wandstärke der Wand des Torsionsprofils zur Breite der Stoßfläche zwischen 1:1,1 und 1:1,5 bemessen.

Erfindungsgemäß ist die Schräge in der Fügefläche am Endabschnitt des Torsionsprofils spanlos gefertigt. Hier wird eine gesteuerte plastische Formänderung am Endabschnitt des Torsionsprofils vorgenommen. Der Endabschnitt wird durch Aufbringen einer äußeren Kraft in die gewünschte Form gebracht. Dies erfolgt insbesondere durch Biegeumformen oder Schubumformen.

Zur Herstellung der Verbundlenkerachse werden zwei Seitenarme und ein Torsionsprofil bereitgestellt. Die Bauteile der Verbundlenkerachse bestehen aus Stahl. Das Torsionsprofil und die Seitenarme weisen zumindest im Bereich der schweißtechnischen Fügung unterschiedliche Wandstärken auf. Das heißt insbesondere, dass die Wandstärke des Torsionsprofils stärker ist als die Wandstärke eines Seitenarms. Das Torsionsprofil und die Seitenarme werden in einem Winkel zueinander angeordnet und durch eine Schweißnaht verbunden.

Zur Herstellung des Torsionsprofils wird eine Ausgangsplatine bereitgestellt, welche eine Wand mit einer Wandstärke aufweist. Der Endabschnitt der Ausgangsplatine wird umgeformt und am Endabschnitt eine Schräge ausgebildet, wonach der Endabschnitt endseitig beschnitten und stirnseitig am Endabschnitt eine Stoßfläche erzeugt wird.

Die Ausgangsplatine wird zum Torsionsprofil umgeformt. Hierbei wird die Ausgangsplatine insbesondere um ihre Längsachse umgeformt und mit dem Querschnitt des Torsionsprofils versehen, also beispielsweise im Querschnitt U- oder V-förmig profiliert.

Des Weiteren werden die beiden Seitenarme bereitgestellt. Die Seitenarme weisen eine Wand mit einer Wandstärke auf, welche von der Wandstärke der Wand des Torsionsprofils verschieden ist.

Das Torsionsprofil und die Seitenarme werden in einem Winkel relativ zueinander ausgerichtet, so dass die Fügefläche des Torsionsprofils und die Fügeflächen der Seitenarme einander zugewandt sind. Danach erfolgt die stoffschlüssige Fügung von Torsionsprofil und Seitenarmen durch eine Schweißnaht an den Fügeflächen.

Insbesondere wird der Endabschnitt des Torsionsprofils bzw. der das Torsionsprofil bildenden Ausgangsplatine seitlich verschoben, gebogen oder verprägt.

Zur Herstellung der Schräge am Endabschnitt kann der Endabschnitt der Ausgangsplatine zunächst S-förmig umgeformt werden. Anschließend wird der Endabschnitt beschnitten und ein Endstück am freien Ende des Endabschnitts von diesem abgetrennt. Der Beschnitt erfolgt rechtwinklig zur Längsachse der Ausgangsplatine bzw. der Wand der Ausgangsplatine. Beim Beschnittvorgang wird insbesondere auf der Seite des Gegenhalters des Schneidwerkzeugs eine leichte Fase erzeugt. Die Beschnittlinie verläuft folglich nicht geradlinig sondern weist am Ende der Beschnittlinie eine geringfügig schräg verlaufende Fase bzw. Fläche auf.

Die Ausgangsplatine kann vor oder nach dem Umformen und Beschneiden des Endabschnitts einer weiteren Umformung unterzogen werden. Bei diesem Umformschritt erhält die Ausgangsplatine zumindest bereichsweise insbesondere über ihre Länge eine Querschnittskonfiguration des Torsionsprofils.

Die Erfindung ist nachfolgend anhand von Zeichnungen näher erläutert. Es zeigen:
- Figur 1a bis 1d): technisch schematisiert die Vorgehensweise zur Fertigung eines Torsionsprofils mit einer Fügefläche, welche eine Schräge und eine Stoßfläche aufweist;
- Figur 2a): einen Ausschnitt aus der Wand des Torsionsprofils und einen Ausschnitt aus der Wand eines Seitenarms vor der schweißtechnischen Fügung;
- Figur 2b): die Bauteile entsprechend der Darstellung der Figur 4a nach der schweißtechnischen Fügung;
- Figur 3: eine Verbundlenkerachse in einer perspektivischen Darstellung;
- Figur 4: eine Ansicht auf die Stirnseite des Endabschnitts eines Torsionsprofils einer Verbundlenkerachse und
- Figur 5: eine Ansicht auf die Stirnseite des Endabschnitts einer weiteren Ausführungsform eines Torsionsprofils.

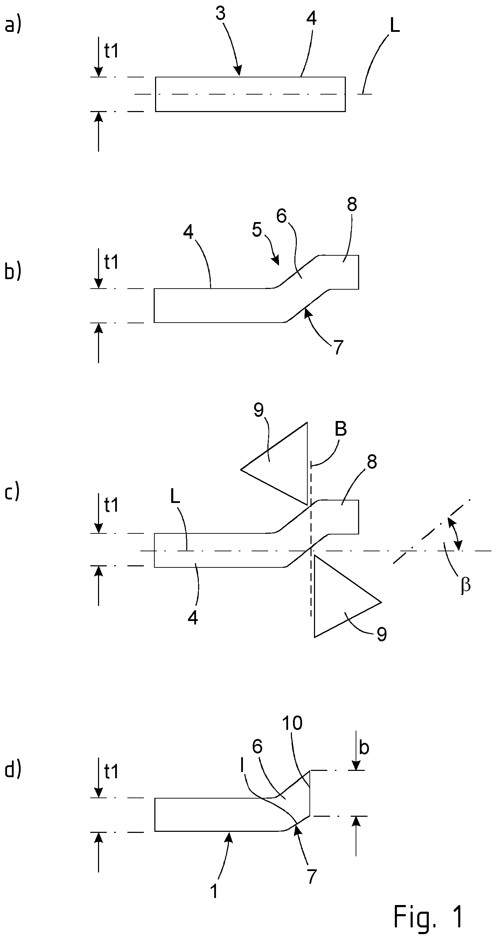

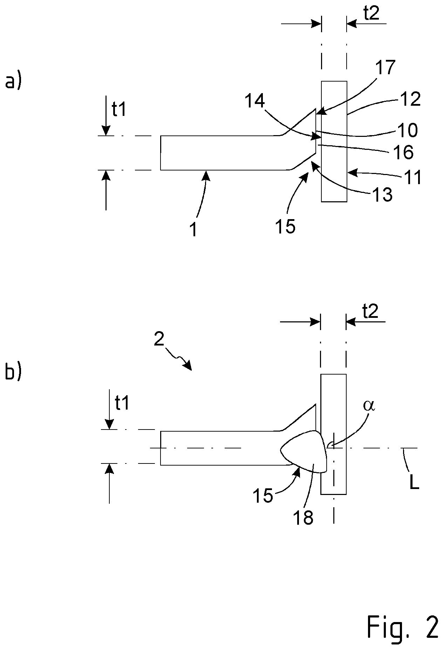

Anhand der Figuren 1a) bis 1d) ist der Umformprozess zur Herstellung eines Torsionsprofils 1 einer Verbundlenkerachse 2 erläutert. Einen Ausschnitt aus der Verbundlenkerachse 2 zeigt die Figur 2b).

Die Figur 1a) zeigt eine Ausgangsplatine 3. Die Ausgangsplatine 3 weist eine Wand 4 mit einer Wandstärke t1 auf.

Ein Endabschnitt 5 der Ausgangsplatine 3 wird spanlos umgeformt. Hierbei wird der Endabschnitt 5 plastisch verformt und S-förmig konfiguriert. Auf diese Weise entsteht am Endabschnitt 5 ein Schenkel 6 mit einer Schräge 7 und ein parallel zur Längsachse L der Wand 4 der Ausgangsplatine 3 verlaufendes Endstück 8. Dies zeigt die Darstellung der Figur 1b). Das Endstück 8 ist seitlich parallel zur Längsachse L der Wand 4 verschoben.

Die Figur 1c) verdeutlicht die Beschnittoperation am Endabschnitt 5. Am Endabschnitt 5 wird ein endseitiger Beschnitt vorgenommen. Das Schneidwerkzeug ist mit dem Bezugszeichen 9 gekennzeichnet. Der Beschnitt erfolgt in einem Winkel rechtwinklig zur Längsachse L der Wand 3 der Ausgangsplatine 13 entlang der Beschnittlinie B.

Die Beschnittoperation erfolgt im Bereich des Schenkels 6 mit der Schräge 7. Beim Beschnitt wird das Endstück 8 entfernt. Stirnseitig am Endabschnitt 5 wird eine rechtwinklig zur Längsachse L verlaufende Stoßfläche 10 erzeugt.

Die Figur 1d) zeigt das fertig beschnittene Torsionsprofil 1. Zur Ausbildung des Torsionsprofils 1 ist die Ausgangsplatine 3 umgeformt worden, beispielsweise um die Längsachse L, um ein U- oder V-förmiges Querschnittsprofil zu erzeugen.

Die Stoßfläche 10 weist eine rechtwinklig zur Längsachse L der Wand 4 des Torsionsprofils 1 gemessene Breite b auf, welche größer ist als die Wandstärke t1 der Wand 4 des Torsionsprofils 1. Das Verhältnis der Wandstärke t1 der Wand 4 des Torsionsprofils 1 zur Breite b der Stoßfläche 10 ist zwischen 1:1,1 und 1:1,5 bemessen.

Die Schräge 7 weist eine axiale Länge I auf. Die axiale Länge I der Schräge 7 ist in Richtung der Längsachse L der Wand 4 des Torsionsprofils 1 gemessen. Diese axiale Länge I ist gemessen im Bereich der späteren Fügeverbindung. Die Schräge 7 verläuft in einem Winkel β von 25° bis 60°, insbesondere von 30° bis 45°, zur Längsachse L der Wand 4 des Torsionsprofils 1. Das Verhältnis der axialen Länge I der Schräge 7 zur Wandstärke t1 der Wand 4 des Torsionsprofils 1 ist zwischen 1:1 und 1:5 bemessen. Die Schräge 7 befindet sich auf der Seite des Endabschnitts 5 des Torsionsprofils 1, welche mit dem Seitenarm 11 einen spitzen Winkel β einschließt.

Zur Herstellung der Verbundlenkerachse 2 wird ein Seitenarm 11 aus Stahl bereitgestellt. Der Seitenarm 11 weist eine Wand 12 mit einer Wandstärke t2 auf. Die Wandstärke t1 der Wand 4 des Torsionsprofils 1 ist größer als die Wandstärke t2 der Wand 12 des Seitenarms 11.

Das Torsionsprofil 1 weist am Endabschnitt 5 eine Fügefläche 13 auf. Die Fügefläche 13 umfasst die Schräge 7 und die stirnseitige Stoßfläche 10.

Der Seitenarm 11 weist eine Fügefläche 14 auf.

Das Torsionsprofil 1 und der Seitenarm 11 werden durch eine Schweißverbindung stoffschlüssig gefügt. Zur Herstellung der Schweißverbindung werden das Torsionsprofil 1 und der Seitenarm 11 zueinander positioniert. Dies zeigt die Darstellung der Figur 2a). Das Torsionsprofil 1 und der Seitenarm 11 sind in einem Winkel α zueinander angeordnet, insbesondere stößt das Torsionsprofil 1 stumpf in einen rechten Winkel α mit T-Stoß an den Seitenarm 11.

Die Fügefläche 13 des Torsionsprofils 1 und die Fügefläche 14 des Seitenarms 11 sind einander zugewandt. Die Stoßfläche 10 verläuft rechtwinklig zur Längsachse L der Wand 4 des Torsionsprofils 1. Die Stoßfläche 10 ist parallel zur Fügefläche 14 des Seitenarms 11 orientiert. Zwischen der Fügefläche 13 des Torsionsprofils 1 und der Fügefläche 14 des Seitenarms 11 ist ein V-förmiger Fügespalt 15 gebildet. Im Tiefsten des V-förmigen Fügespalts 15 schließt sich ein parallel zwischen der Stoßfläche 10 und der Fügefläche 14 des Seitenarms 11 ausgebildeter Spaltabschnitt 16 an. Die Schräge 7 verläuft in einem spitzen Winkel zur Stirnseite 17 hin. An der Stirnseite 17 endet die Schräge 7. Die Stoßfläche 10 schließt sich mit einem stumpfen Winkel an die Schräge 7 an.

Die stoffschlüssige Fügeverbindung erfolgt über eine Schweißnaht 18, wie in der Figur 2b) dargestellt. Durch die Schräge 7 und den V-förmig konfigurierten Fügespalt 15 wird die Schweißnaht 18 effizient, wobei ein hoher Einbrand im Torsionsprofil 1 erreicht wird.

Durch die Nahtvorbereitung und die Ausbildung der Schräge 7 in der Fügefläche 13 am Torsionsprofil 1 sowie die V-förmige Konfiguration des Fügespalts 15 entsteht eine Schweißverbindung zwischen Torsionsprofil 1 und Seitenarm 2 mit einer anforderungsgerechten Qualität und Lebensdauer. Der Einbrand der Schweißnaht 18 am Torsionsprofil 1 kann deutlich erhöht werden ohne dass es zu einem Durchbrand am Seitenarm 11 kommt. Die Schweißnaht 18 genügt höchsten Festigkeitsanforderungen, wodurch insgesamt die Lebensdauer der Verbundlenkerachse 2 erhöht werden kann, ohne diese im Gesamtgewicht zu erhöhen.

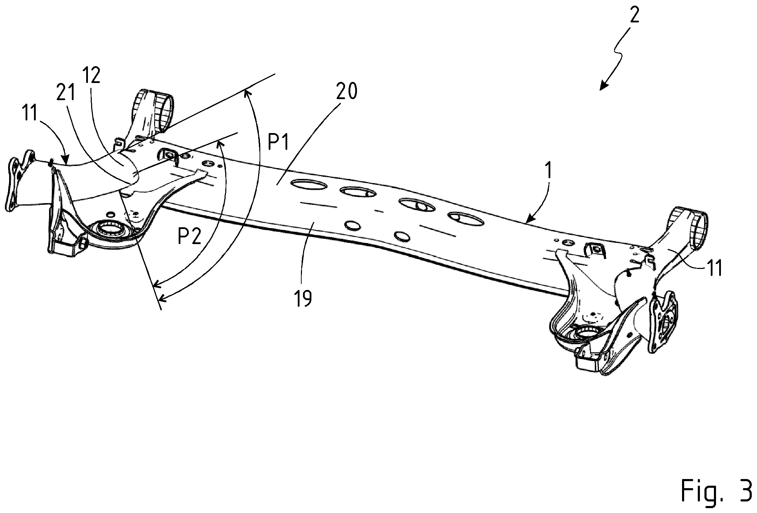

Die Figur 3 zeigt eine Verbundlenkerachse 2 mit einem Torsionsprofil 1 und zwei Seitenarmen 11. Das Torsionsprofil 1 verbindet die beiden Seitenarme 11 und ist mit diesen verschweißt. Das Torsionsprofil 1 weist eine Wand 4 mit einer Wandstärke t1 auf. Jeder Seitenarm 11 weist eine Wand 12 mit einer Wandstärke t2 auf. Die Wandstärke t1 der Wand 4 des Torsionsprofils 1 kann größer als die Wandstärke t2 eines Seitenarms sein. Auf die Ausführungen zu den Darstellungen in den Figuren 1 und 2 wird verwiesen. Das Torsionsprofil 1 hat einen U-förmigen Querschnitt mit zwei Seitenschenkeln 19, die über einen Scheitelabschnitt 20 verbunden sind. Mit dem Endabschnitt 5 stößt das Torsionsprofil an die Wand 12 eines Seitenarms. Die Fügefläche 13 am Endabschnitt 5 des Torsionsprofils 1 ist an die Außenkontur der Wand 12 des Seitenarms 11 angepasst.

Durch den Pfeil P1 ist in der Figur 3 schematisch die Länge eines Seitenschenkels 19 verdeutlicht, mit welchem der Endabschnitt 5 des Torsionsprofils am Außenumfang eines Seitenarms 11 anstößt. Dieser beträgt bezogen auf den Umfang des im Querschnitt runden Seitenarms etwa 180° +/- 15°.

Durch den Pfeil P2 ist die Länge eines Längenabschnitts 21 des Seitenschenkels 19 verdeutlicht, in welchem die Schräge 7 auf der Innenseite des Seitenschenkels 19 vorgesehen ist. Die Schräge 7 ist im unteren Längenabschnitt 21 des Seitenschenkels 19 vorgesehen. Insbesondere erstreckt sich die Schräge 7 über zwei Drittel, insbesondere ca. der Hälfte der Länge eines Seitenschenkels 19. Bezogen auf den Querschnitt eines Seitenarms 11 erstreckt sich die Schräge 7 auf einem Umfangsabschnitt von ca. 90° +/- 15°. Die Schräge 7 ist vom freien Schenkelende ausgehend im unteren Längenabschnitt 21 eines Seitenschenkels 19 vorgesehen.

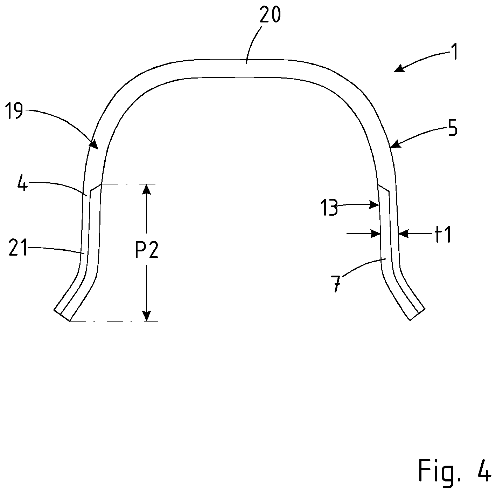

Die Figur 4 zeigt eine Stirnansicht auf die Fügefläche 13 an einem Endabschnitt 5 eines Torsionsprofils 1. Das Torsionsprofil 1 weist eine Wand 4 mit einer Wandstärke t1 auf. In der Fügefläche 13 am Endabschnitt 5 des Torsionsprofils 1 ist eine erfindungsgemäß erzeugte Schräge 7 vorgesehen. Die Schräge 7 verläuft innenseitig der Seitenschenkel 19 des Torsionsprofils 1.

Die Schräge 7 ist in dem vom freien Schenkelende ausgehenden unteren Längenabschnitt 21 des Seitenschenkels 19 vorgesehen. Die tangentiale Länge des Längenabschnitts 21 ist durch den Pfeil P2 gekennzeichnet. Im dargestellten Ausführungsbeispiel erstreckt sich die Schräge 7 etwa über die Hälfte der Länge eines Seitenschenkels 19.

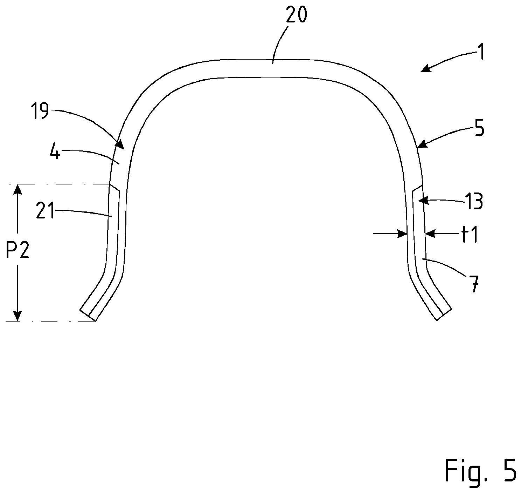

Die Figur 5 zeigt eine Stirnansicht auf die Fügefläche 13 in einer alternativen Ausgestaltung am Endabschnitt 5 eines Torsionsprofils 1. Anders als bei der Ausführungsform gemäß der Figur 4 ist hier die Schräge 7 außenseitig der Seitenschenkel 19 des Torsionsprofils angeordnet. Die Schräge 7 ist wie auch bei den anderen Ausführungsformen durch spanende Bearbeitung erzeugt. Die Schräge 9 erstreckt sich in einem vom freien Schenkelende ausgehenden unteren Längenabschnitt 21 eines jeden Seitenschenkels 13. Ansonsten entspricht die Ausführungsform derjenigen der Figur 4 und die zugehörige Beschreibung

### Bezugszeichen:

- 1 -: Torsionsprofil
- 2 -: Verbundlenkerachse
- 3 -: Ausgangsplatine
- 4 -: Wand v. 1
- 5 -: Endabschnitt
- 6 -: Schenkel
- 7 -: Schräge
- 8 -: Endstück
- 9 -: Schneidwerkzeug
- 10 -: Stoßfläche
- 11 -: Seitenarm
- 12 -: Wand v. 11
- 13 -: Fügefläche
- 14 -: Fügefläche
- 15 -: Fügespalt
- 16 -: Spaltabschnitt
- 17 -: Stirnseite
- 18 -: Schweißnaht
- 19 -: Seitenschenkel
- 20 -: Scheitelabschnitt
- 21 -: Längenabschnitt v. 19

- b: - Breite
- B: - Beschnittlinie
- L: - Längsachse
- t1: - Wandstärke
- t2: - Wandstärke
- α: - Winkel
- β: - Winkel I - Länge v. 7

## Patentansprüche

1. Verbundlenkerachse, welche zwei Seitenarme (11) und ein Torsionsprofil (1) aufweist, wobei das Torsionsprofil (1) eine Wand (4) mit einer Wandstärke (t1) aufweist und die Seitenarme (11) jeweils eine Wand (12) mit einer Wandstärke (t2) aufweisen, wobei und das Torsionsprofil (1) an jedem Endabschnitt (5) eine Fügefläche (13) aufweist und die Seitenarme (11) jeweils eine Fügefläche (14) aufweisen, wobei das Torsionsprofil (1) und die Seitenarme (11) an ihren einander zugewandten Fügeflächen (13, 14) jeweils durch eine Schweißnaht (18) verbunden sind, **dadurch gekennzeichnet, dass** die Fügefläche (13) am Endabschnitt (5) des Torsionsprofils (1) eine spanlos gefertigte Schräge (7) aufweist und der Endabschnitt (5) des Torsionsprofils (1) stirnseitig eine Stoßfläche (10) aufweist, wobei die Stoßfläche (10) eine rechtwinklig zur Längsachse (L) der Wand (3) eines Seitenarms (2) gemessene Breite (b) aufweist, welche größer ist als die Wandstärke (t1) der Wand (3) des Seitenarms (2).

2. Verbundlenkerachse nach Anspruch 1, **dadurch gekennzeichnet, dass** die Wandstärke (t1) der Wand (4) des Torsionsprofils (1) größer ist als die Wandstärke (t2) der Wand (12) eines Seitenarms (11).

3. Verbundlenkerachse nach Anspruch 1, **dadurch gekennzeichnet, dass** die Wandstärke (t1) der Wand (4) des Torsionsprofils (1) kleiner ist als die Wandstärke (t2) der Wand (12) eines Seitenarms (11).

4. Verbundlenkerachse nach Anspruch 1 bis 3, **dadurch gekennzeichnet, dass** die Stoßfläche (10) im Wesentlichen rechtwinklig zur Längsachse (L) der Wand (34) des Torsionsprofils (1) verläuft.

5. Verbundlenkerachse nach 4, **dadurch gekennzeichnet, dass** sich die Stoßfläche (10) an die Schräge (7) anschließt.

6. Verbundlenkerachse nach einem der Ansprüche 1 bis 5, **dadurch gekennzeichnet, dass** die Schräge (7) in einem Winkel (β) von 25° bis 60°, insbesondere von 30° bis 45°, zur Längsachse (L) der Wand (4) des Torsionsprofils (1) verläuft.

7. Verbundlenkerachse nach einem der Ansprüche 1 bis 6, **dadurch gekennzeichnet, dass** die Schräge (7) eine axiale Länge (I) aufweist und das Verhältnis der axialen Länge (I) der Schräge (7) zur Wandstärke (t1) der Wand (4) des Torsionsprofils (1) zwischen 1:1 und 1:1,5 bemessen ist.

8. Verbundlenkerachse nach Anspruch 7, **dadurch gekennzeichnet, dass** das Verhältnis der Wandstärke (t1) der Wand (4) des Torsionsprofils (1) zur Breite (b) der Stoßfläche (10) zwischen 1:1,1 und 1:1,5 bemessen ist.

9. Kraftfahrzeugkomponente nach einem der Ansprüche 1 bis 8, **dadurch gekennzeichnet, dass** die Schräge (7) in einem vom freien Ende einer Wand (4) des ersten Bauteils (1) ausgehenden Längenabschnitt (21) vorgesehen ist.
